# EUROPEAN PATENT SPECIFICATION

(11) **EP 3 988 884 B1**
(45) Date of publication and mention of the grant of the patent: **29.11.2023**
(21) Application number: 20202775.1
(22) Date of filing: 20.10.2020
(51) Int. Cl.: F28D 9/04

(54) **DISHWASHER**
GESCHIRRSPÜLER
LAVE-VAISSELLE

(43) Date of publication of application: 27.04.2022
(73) Proprietor: HAIER Germany GmbH, 81829 München (DE)
(72) Inventor: Cervenka, Bystrik, 90419 Nürnberg (DE); Bächer, Peter, 91301 Forchheim (DE); Dominik, Wojciech, 90478 Nürnberg (DE); Petracek, Pavol, 90482 Nürnberg (DE); Li, Hongkun, 91056 Erlangen (DE); Lampe, Hansjörg, 90491 Nürnberg (DE); Yang, Lin, Qingdao 266000, Shandong Province (CN); Pan, Xianjie, Qingdao 266000, Shandong Province (CN)
(74) Representative: Rau, Schneck & Hübner Patentanwälte Rechtsanwälte PartGmbB

(56) References cited:
- EP-A1- 2 215 954
- EP-A2- 2 443 984
- EP-A2- 2 614 764
- CN-B- 108 061 471
- US-A- 4 550 771

## Description

The invention relates to a dishwasher. The invention further relates to a method to operate a dishwasher.

The prior art document AT 507 447 A2 discloses a dishwasher with a heat exchanger for recovering thermal energy from used drain water for heating fresh water for a subsequent washing phase. Such heat exchangers are cost-intensive and sensitive to clogging.

The prior art document GB 2 311 932 A discloses a dishwasher with a water tank for storing heated washing water. The washing water is used to heat drying air. It is a disadvantage that food residues, which are carried along by the dirty washing water, can remain in the water tank and allow germs to grow. Furthermore, the soiled water tank, which is used as a heat exchanger requires a lot of installation space and its fluid ports are sensitive to clogging.

The prior art document EP 2 614 764 A2 discloses a heat exchanger for a dishwasher according to the preamble of claim 1. The heat exchanger comprises a first channel shaped in a spiral manner and a second channel shaped in a spiral manner which are separated by a heat transfer plate. The drain water and the fresh water are guided through the channels in different planes such that heat is transferred through the heat transfer plate.

The prior art document US 4 550 771 A discloses a waste water heat recovery apparatus which is used in buildings to recover heat from waste water from residential or commercial uses such as washing.

The prior art document EP 2 215 954 A1 discloses a dishwasher with a heat pump.

The prior art document EP 2 443 984 A2 discloses a dishwasher with a heat exchanger. The heat exchanger is meander-shaped.

An objective of the present invention is to enhance a dishwasher by decreasing its complexity and thus its overall costs and by increasing the transfer of thermal energy.

This object is achieved in accordance with the invention by a dishwasher having the features set out in claim 1. It was found according to the invention, that a dishwasher comprising a spiral plate heat exchanger can be manufactured cost-efficient and shows a decreased probability of failure. Compared to conventional heat exchangers of the required size, which typically comprise pipes, in particular pipe bundles or pipe coils, the spiral plate heat exchanger can be designed significantly smaller whilst providing the same heat transfer capacity. It allows for a simple and easy-to-manufacture design and due to its self-cleaning capacity it is insensitive to clogging.

The heat exchanger comprises at least two fluid ducts, namely at least a first fluid duct and a second fluid duct, preferably exactly two fluid ducts. Adjacent fluid ducts are separated from each other by means of at least one partition wall. Thermal energy can be transferred from a fluid within the first duct to a fluid within the adjacent second duct over the at least one partition wall. The at least one partition wall and thus the fluid ducts are shaped in a spiral manner, e.g. arch-shaped, in particular spiral-shaped. The heat exchanger preferably defines a radial direction, which is essentially orthogonal to the at least one partition wall, a tangential direction, which is essentially parallel to a flow direction of the fluid within the fluid ducts and an axial direction, which is parallel to a central axis. The at least one partition wall is wound around the central axis. The at least two fluid ducts extend around the central axis. A width of the smallest fluid ducts in radial direction is preferably at least 2 mm, more preferably at least 5 mm, more preferably at least 10 mm. A ratio between the width of the smallest fluid duct and the thickness of the partition walls is preferably at least 5, particularly at least 7, more particularly at least 10, more particularly at least 15. The transfer of thermal energy between adjacent fluid ducts is thereby highly effective.

Preferably, each fluid duct of the heat exchanger comprises at least two, particularly at least five, more particularly at least ten, windings. The heat transfer capacity of the heat exchanger is thus increased.

Preferably, the first fluid duct is enclosed at least partially along the flow direction on two opposed sides by the second fluid duct. Also the second fluid duct can be enclosed at least partially along the flow direction on two opposed sides by the first fluid duct. This further increases the heat recovery performance of the heat exchanger.

Preferably, the at least one spiral-shaped partition wall is single-piece. The heat exchanger can thus be manufactured highly economical. The at least one spiral-shaped partition wall can also comprise at least two pieces, in particular at least three pieces, more particular at least four pieces. The spiral-shaped at least one partition wall can thus be manufactured in a more flexible manner.

Preferably, the height of the heat exchanger, in particular of the at least one partition wall, lies within a range of 5 mm to 100 mm, in particular 20 mm to 80 mm, more particular 40 mm to 60 mm. The height of the at least one partition wall can be larger than the radial distance between adjacent windings of the at least one partition wall in the radial direction. The increased flow velocity of the fluid enhances the self-cleaning capacity of the spiral plate heat exchanger.

Preferably, the heat exchanger, in particular, the spiral-shaped at least one partition wall, is made of a material with a thermal conductivity coefficient of at least 20 W/mK, more preferably at least 50 W/mK, more preferably at least 100 W/mK, more preferably at least 200 W/mK, more preferably at least 300 W/mK. Preferably, the heat exchanger, in particular, the spiral-shaped at least one partition wall, comprises a metal material, more particular copper and/or aluminum and/or stainless steel. In particular, the at least one partition wall can be manufactured from sheet-metal, which is bend in a spiral shape. The manufacturing of the heat exchanger is thus particularly economic. The at least one partition wall can be manufactured from a plastic material.

Preferably, the at least one partition wall is arranged between an upper cover and a lower cover of the heat exchanger. The upper cover and/or the lower cover preferably comprise grooves for fastening the partition wall. These grooves can be configured to determine the spacing, in particular the radial distance, between adjacent windings of the at least one partition wall and/or for sealing the at least one partition wall against the respective cover. The grooves can be integrally molded into the upper cover and/or the lower cover. The upper cover and/or the lower cover can comprise a metal material. Preferably, the upper cover and/or the lower cover are made of a material with a maximum thermal conductivity coefficient of 1 W/mK, in particular 0.5 W/mK, more particular 0.1 W/mK, more particular 0.01 W/mK. The upper cover and/or the lower cover can comprise plastic, more particularly polyethylene and/or acrylic-butadiene-styrene and/or acrylic glass. The heat exchanger can thus be operated highly energy efficient.

Preferably, the heat exchanger comprises at least three, more particular at least four, fluid ducts. Preferably, the heat exchanger comprises at least two water ducts and additionally at least one air duct and/or at least two air ducts and/or additionally at least one water duct. The heat exchanger can thus be operated more flexibly. These fluid ducts can overlap each other in the radial direction and/or be arranged spaced apart from each other in the axial direction. For example, two fluid ducts can be configured to overlap each other in radial direction and two further fluid ducts, which also overlap each other in the radial direction, are spaced apart from the latter in the axial direction. These spaced apart fluid ducts are preferably concentric to each other and more preferably share the same partition walls and are separated from each other by an intermediate wall, which is aligned parallel to the upper cover and the lower cover.

The radial distance between adjacent windings of the at least one partition wall is preferably identical for all fluid ducts and/or preferably constant over at least 50 %, particularly at least 70 %, particularly at least 90 %, of the longitudinal extension of the respective fluid duct.

Preferably, the heat exchanger comprises fluid duct connection means. These connection means can be configured in the form of a screw connection and/or a plug connection, in particular a hose connection, more particular a hose connection comprising a saw tooth profile. Preferably, at least one of the fluid duct connection means is configured such that it conducts the fluid through a connection opening parallel to the tangential direction and/or parallel to the axial direction. Preferably, at least a first fluid duct connection means is configured such that it conducts a fluid through a connection opening parallel to the tangential direction and at least one second fluid duct connection means is configured such that it conducts the fluid through a connection opening parallel to the axial direction.

The dishwasher comprises a tub and at least one spraying device, in particular a rotable spraying arm, for dispensing washing water over dishes. The dishwasher can further comprise at least one basket for carrying dishes, which is arranged in the tub. Preferably, the dishwasher comprises a fluid management device with the heat exchanger. The fluid management device can comprise a water pump for circulating washing water, which is connected to the tub, in particular to a sump, of the dishwasher and/or an air blower for conveying drying air, which is connected to a tub. Preferably, the fluid management device comprises a water pump for pumping drain water from a sump to a drain water port and a separate water pump for pumping the washing water from the sump to the at least one spraying device. The dishwasher can comprise a fresh water duct, which connects a fresh water port with the sump, preferably over a water tank, more preferably via a valve. Preferably, the heat exchanger comprises at least two fluid ducts with equal cross sections. More preferably, the spacing between the adjacent windings of the at least one partition wall of the first duct is equal to the spacing of the windings, which confine a second duct, in particular in radial direction. The dishwasher can comprise a control device for controlling the washing process.

A dishwasher as claimed in claim 2 can be operated particularly energy efficient. The drain water duct is preferably connected to the tub, in particular to the sump. The drain water duct can extend between the sump and the drain water port through the heat exchanger, preferably also through the water pump. Heated washing water, in particular drain water, which is drained after finishing one of several washing phases can thus be conveyed through the heat exchanger for recovering thermal energy.

A dishwasher as claimed in claim 3 can be operated particular energy efficient and thus economic. The fresh water duct preferably extends between the fresh water port and the tub, in particular the sump, and through the heat exchanger. Such fresh water port is generally configured to receive cold water. Since the fresh water passes through the heat exchanger, fresh water can be preheated before entering the tub.

The drain water duct and the fresh water duct pass through the heat exchanger. Energy can thus be recovered from the drain water and be transferred to the fresh water. The fresh water can thus be preheated for the next washing phase and/or washing cycle. The overall process of cleaning and drying the dishes is called the washing cycle. Each washing cycle comprises at least one, preferably at least two, preferably at least three, washing phases. Each washing cycle preferably comprises at least one phase from the following selection, a pre-washing phase, particularly with cold water, a cleaning phase, particularly with heated water, an washing phase, particularly with heated water, a cold-rinse phase, a hot rinse phase, particularly with a clear rinsing agent, and/or a drying phase.

A dishwasher as claimed in claim 4 can be operated particularly energy efficient and thus economic. Using the heat exchanger in counterflow operation allows to recover a particularly high percentage of the thermal energy from the drain water. Preferably a first duct inlet of the first fluid duct is arranged adjacent to a second duct outlet of the second fluid duct and/or a first duct outlet of the first duct is arranged adjacent to a second duct inlet of a second duct. By this, the outlet of the duct for conducting the fresh water is adjacent to the inlet of the duct for conducting the drain water. It is thus ensured that the fresh water can be heated nearly to the inflow temperature of the drain water and thus to the maximum possible temperature.

A dishwasher as claimed in claim 5 has a further increase in efficiency. Such heat exchanger ensures that the outermost duct of the heat exchanger is flowed through by cold fresh water or cold drain water. Heat losses to the environment can thus be avoided. The heat exchanger can also comprise a heat insulation for further reducing heat losses.

A dishwasher as claimed in claim 6 is particularly robust in operation. Preferably, the spacing between the adjacent windings of the at least one partition wall of the first duct differs from the spacing of the windings, which confine the second duct, particularly in radial direction, by a factor of at least 1.2, particularly at least 1.5, particularly at least 2, particularly at least 3. For this, the relevant section of the fluid ducts is the section within which heat is transferred between the fluids, in particular, the section in which the at least one partition wall is arranged concentric and/or parallel to each other. Preferably, the cross section of the drain water is larger than the cross section of the fresh water duct. By this, clogging of the drain water duct can effectively be avoided. Further, the flow velocity within the drain water duct is reduced due to the increased cross section, which further increases the thermal energy exploitation.

The distance between adjacent windings of the at least one partition wall can be constant or can vary along the flow direction. The sensitivity to clogging can thus be influenced according to local flow conditions.

A dishwasher as claimed in claim 7 is particularly compact. Preferably, the heat exchanger is arranged at a bottom area of the dishwasher, more particularly below the tub and/or the sump and/or in a side area and/or in a back area of the dishwasher. Due to the small height of the heat exchanger, compared to its diameter, it can be installed in a very space-saving manner. Preferably, a maximum ratio between an axial dimension of the heat exchanger, in particular the at least one partition wall, and its diameter is 1.0, preferably 0.5, more preferably 0.3, even more preferably 0.2.

A dishwasher as claimed in claim 8 can be operated particularly efficient and thus economic. For avoiding germ growth, the buffer tank is preferably connected to the fresh water duct. Preferably, the bottom of the buffer tank is arranged above a bottom of the tub, in particular the sump, such that the water stored in the buffer tank can be conducted gravity-based from the buffer tank into the tub, in particular into the sump. The buffer tank allows to buffer the fresh water until the drain water is completely drained from the tub, in particular the sump. Thus, a mixing of fresh water and drain water can be prevented.

A dishwasher as claimed in claim 9 allows for storing heated fresh water over a long period, in particular between consecutive washing phases, whilst heat losses are prevented. Heated fresh water can thus be stored until the next washing phase of a certain wash session is initiated or even until the next wash session is started, without loss of recovered thermal energy to the environment.

A dishwasher as claimed in claim 10 can be operated particularly time-efficient. The tank heating unit is preferably an electric heating device. The tank heating unit allows for already heating the fresh water within the buffer tank whilst the drain water is not yet completely drained from the sump.

A dishwasher as claimed in claim 11 can be operated particularly efficient and manufactured economically. Due to the drying air duct extending through the heat exchanger, the heat exchanger can also be used for removing heat from the hot and moist air and/or for separating moisture from the hot and moist air and thus to remove humidity from the tub. For this, the heat exchanger can be configured and/or operated in such a way that the moist drying air passes the dew point within the heat exchanger and humidity is condensed. Preferably, the dishwasher, in particular the fluid management device, comprises a cooling duct, which extends through the heat exchanger. Preferably the cooling duct is connected to the environment. The heat exchanger can thus be used to transfer moisture out of the tub.

The condensed humidity can be drained from the heat exchanger to the drain water port.

An independent aspect of the invention, which can also be combined with the other aspect disclosed herein, is to provide a dishwasher comprising a heat exchanger, and a drying air duct, which extends through the heat exchanger for conveying drying air through the tub. Preferably also a drain water duct and/or a cooling duct extends through the heat exchanger for transferring thermal energy to the drying air and/or moisture from the drying air.

A dishwasher as claimed in claim 12 can be manufactured particularly economic. Preferably, the heat exchanger comprises only two fluid ducts. The drying air duct can be at least in sections identical with the fresh water duct and/or the drain water duct. Preferably, the cooling duct is at least in sections identical with the fresh water duct and/or the drain water duct. In a washing cycle, the heat exchanger is preferably configured to be switched to either transfer heat between liquids or gases. The consecutive use of the same heat exchanger, in particular of the same fluid ducts for liquids as well as gases allows to reduce the number of necessary parts of the dishwasher, in particular the fluid management device. The dishwasher can thus be manufactured particularly cost-efficient.

Preferably, the fluid management device, in particular the heat exchanger, comprises two fresh water valves for reversibly disconnecting the fresh water duct from the heat exchanger and/or two drying air valves for reversibly disconnecting the drying air duct from the heat exchanger and/or two the drain water valves for reversibly disconnecting the drain water duct from the heat exchanger and/or two cooling valves for reversibly disconnecting the cooling duct from the heat exchanger. Instead of the two valves, a three-way valve can be used. Preferably, the management device comprises a drain water valve reversibly disconnecting a drain water duct from the sump. The fluid management device can further comprise a tank water valve for reversibly disconnecting the buffer tank from the sump and/or a condensed water valve for reversibly disconnecting a condensed water duct, which extends to the drain water port, from the heat exchanger.

A dishwasher as claimed in claim 13 can be operated particularly efficient. The drying air duct preferably comprises an electric air heating unit for heating the drying air before it is reconveyed into the tub. The heat conductor additionally or as an alternative to the electric air heating unit is configured to transfer thermal energy from water stored in the buffer tank to the drying air. The heat conductor preferably comprises a heat pipe. Fins can be connected to the heat pipe for increasing the flowed around surface of the heat conductor, in particular the heat pipe for effectively transferring heat from the stored water to the drying air. According to a further aspect of the invention, the drying air is heated by means of the tank heating unit, over the water stored within the buffer tank and the heat conductor.

A dishwasher as claimed in claim 14 is particularly robust in operation. The condensed water duct can be configured to conduct the condensed moisture to the drain port such that clogging of the heat exchanger due to condensed water can be prevented.

A further aspect of the present invention is to provide a method to operate a dishwasher in an effective and energy efficient manner.

This object is achieved in accordance with the invention by a method having the features said out in claim 15. Preferably, the heat exchanger is used for transferring thermal energy between fluids, in particular liquids and/or gases, in particular between drain water and/or fresh water and/or cooling fluid and/or drying air and/or moist air.

Further features, advantages and details of the invention result from the subsequent description of exemplary embodiments. In the drawings:
- Fig. 1: shows a schematic front view of a dishwasher according to a first embodiment comprising a tub, a sump and a fluid management device,
- Fig. 2: shows a fluid diagram of the dishwasher in fig. 1, wherein the fluid management device comprises water pumps connected to the dishwasher sump, a heat exchanger and a buffer tank for storing water received from the heat exchanger,
- Fig. 3: shows a perspective view of the heat exchanger in fig. 2, comprising a heat exchanger housing with two inlet ports and two outlet ports,
- Fig. 4: shows an exploded view of the heat exchanger in fig. 3, comprising an upper cover, a lower cover and a spiral plate, which is enclosed fluid-tight between the upper cover and the lower cover, and
- Fig. 5: shows a fluid diagram of a dishwasher according to a second embodiment.

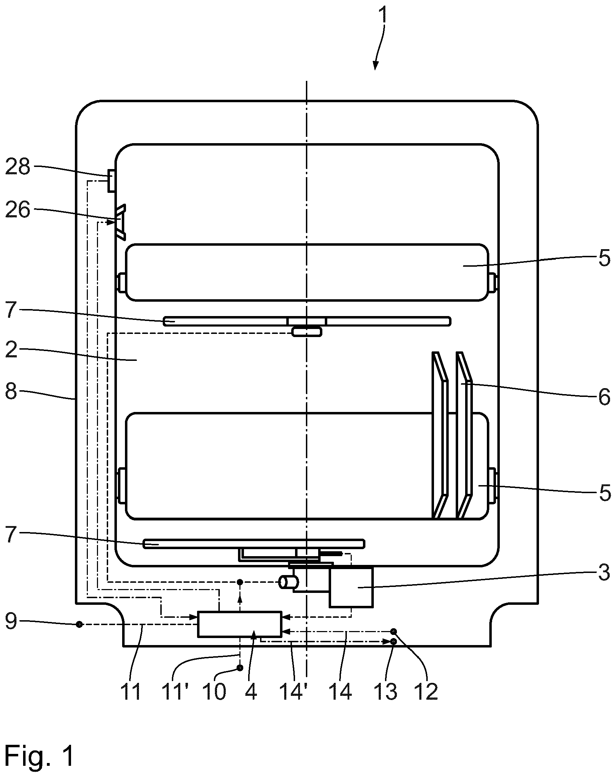

The dishwasher 1 according to the first embodiment as shown in fig. 1 to fig. 4 comprises a tub 2, the sump 3 that is arranged at the bottom of the tub 2 and a fluid management device 4 for providing the tub 2 and the sump 3 with water and drying air. In the tub 2 two dish baskets 5 for carrying dishes 6 are arranged. Below each of the dish baskets 5 a spraying arm 7 for dispensing water is positioned. The spraying arms 7 are in fluid conducting connection with the fluid management device 4.

The tub 2 and the sump 3 are arranged such that the water, which is dispensed in the tub 2 and over the dishes 6 is conducted towards the sump 3 and collected therein. The fluid management device 4 is in fluid conducting connection with the tub 2. The fluid management device 4 is arranged for conveying washing water from the sump 3 to the spraying arms 7.

The tub 2, the sump 3 and the fluid management device 4 are arranged within a dishwasher housing 8. The dishwasher 1 comprises a fresh water port 9, over which fresh water is received, and a drain water port 10, over which drain water is discharged. The fresh water port 9 and the drain water port 10 are connected to the fluid management device 4 via water ducts 11, 11'. Further, the dishwasher 1 comprises an air inlet 12 and an air outlet 13, both being in fluid conducting connection with the fluid management device 4 via air ducts 14, 14'.

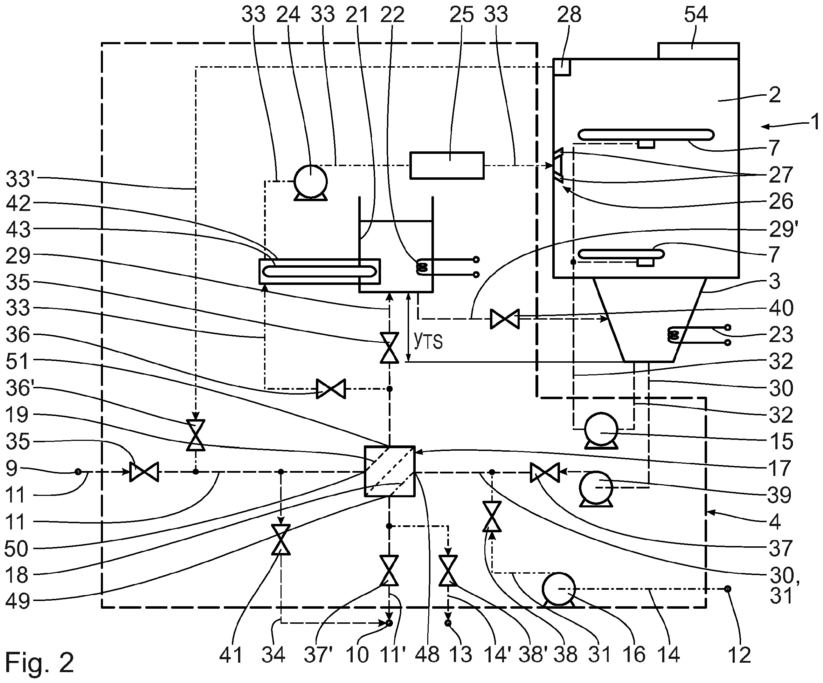

Fig. 2 shows a flow diagram of the dishwasher 1. The fluid management device 4 comprises a first water pump 15 for recirculating washing water from the sump 3 to the spraying arms 7. Further, the fluid management device 4 comprises a second water pump 39 for pumping drain water from the sump 3 to the drain water port 10. A first air blower 16 of the fluid management device 4 is configured to convey cooling air, in particular ambient air, from the air inlet 12 to the air outlet 13.

The dishwasher 1 comprises a heat exchanger 17. The heat exchanger 17 is a spiral plate heat exchanger. The heat exchanger 17 comprises at least one partition wall 20, preferably at least two partition walls. A height h in an axial direction z of the at least one partition wall 20 might range from 40 mm to 100 mm, preferably is 50 mm. A diameter d in a radial direction r of the at least one partition wall 20 might range from 100 mm to 200 mm, preferably is 150 mm. The heat exchanger 17 comprises a first duct 18 and a second duct 19. The first duct 18 and the second duct 19 are arranged adjacent to each other. The first duct 18 and the second duct 19 are shaped in a spiral manner. Preferably, the first duct 18 and the second duct 19 are wound in a spiral manner around an axis M of the heat exchanger 17. A cross section of the first duct 18 may be larger than a cross section of the second duct 19. As an alternative, the cross section of the first duct 18 may be identical with the cross section of the second duct 19. The first duct 18 and the second duct 19 are separated from each other by means of the at least one partition wall 20. The at least one partition wall 20 is shaped in a spiral manner. The at least one partition wall 20 is wound around the axis M. The at least one partition wall 20 is integrally designed as a single piece and/or comprises several partition wall sections which are connected to each other. The at least one partition wall 20 might be created based on a spiral curve or based on partition wall sections which have a different radius and are connected to each other in a spiral manner. The at least one partition wall 20 comprises copper, aluminum, stainless steel and/or a plastic material. The at least one partition wall 20 enables an increased thermal conductivity. In particular, the heat exchanger 17 is arranged such that it is used in counterflow operation.

The fluid management device 4 comprises a buffer tank 21. A bottom of the buffer tank 21 is positioned above a bottom of the sump 3. In particular, the bottom of the buffer tank 21 is spaced apart from the bottom of the sump 3 by a vertical distance y_{TS} of at least 100 mm. Preferably, the bottom of the buffer tank 21 is arranged above the top of the sump 3, more preferably at a distance of at least 100 mm. The buffer tank 21 is connected to the second duct 19 and the sump 3 via water ducts 29, 29'. In particular, the fresh water port 9 is connected to the sump 3 via the second duct 19 and the buffer tank 21.

A tank heating unit 22 is arranged within the buffer tank 21 for heating the fresh water. A sump heating unit 23 is positioned within the sump 3 for heating washing water. The fluid management device 4 further comprises a second air blower 24 and an air heating unit 25. The second air blower 24 is configured to blow drying air over air ducts 33, 33' into the tub 2 and thus, over the dishes 6. The fluid management device 4 therefore comprises a drying air outlet 26, which is arranged at the tub 2. The drying air outlet 26 is formed by drying air nozzles, which are arranged at an inner wall of the tub 2 and directed towards the dish baskets 5 and thus the dishes 6. A drying air inlet 28 of the fluid management device 4 is arranged at the tub 2. For circulating drying air through the tub 2, the drying air inlet 28 is connected to the drying air outlet 26 over the air ducts 33', 33, the second duct 19 of the heat exchanger 17, the second air blower 24 and the air heating unit 25.

The first duct 18 is connected to the sump 3 via the second water pump 39, to the air inlet 12 via the first air blower 16, to the air outlet 13 and to the drain water port 10. The second duct 19 is connected to the fresh water port 9, to the drying air inlet 28, to the sump 3 via the buffer tank 21 and to the drying air outlet 26 via the second air blower 24 and the air heating unit 25.

The fluid management device 4 comprises several fluid ducts, which partially extend over identical pipings. A fresh water duct extends from the fresh water port 9 via the water duct 11, the second duct 19, the water duct 29 and the buffer tank 21 to the sump 3. A drain water duct extends from the sump 3 via a water duct 30, the second water pump 39, the first duct 18 and the water duct 11' to the drain water port 10. A cooling air duct extends from the air inlet 12 via the air duct 14, the first air blower 16, an air duct 31, the first duct 18 and the air duct 14' to the air outlet 13. A washing water duct extends from the sump 3 via a water duct 32 and the first water pump 15 to the spraying arms 7. A drying air duct extends between the drying air inlet 28 and the drying air outlet 26 via the air duct 33', the second duct 19, the air duct 33, the second air blower 24 and the air heating unit 25. Further, a condensed water duct 34 connects the second duct 19, in particular the heat exchanger 17, to the drain water port 10.

In order to reversibly disconnect the water ducts 11, 29 from the second duct 19, there are fresh water valves 35, 35' arranged at both ends of the second duct 19, in particular at both ends of the part of the piping which is identical for the fresh water duct and the drying air duct. Drying air valves 36, 36' are arranged at both ends of the second duct 19, in particular at both ends of the piping, which is used both by the fresh water duct and the drying air duct. Drain water valves 37, 37' are arranged at both ends of the first duct 18, in particular at both ends of the piping, which is identical for the drain water duct and the cooling air duct. Cooling air valves 38, 38' are arranged at both ends of the first duct 18, in particular at both ends of the piping, which is part of the drain water duct and also the cooling air duct.

As an alternative to using two separate valves at a particular end of the first duct 18 respectively the second duct 19, a three-way-valve can be used. The fluid management advice 4 can thus be configured such that the first duct 18 and the second duct 19 always conduct only one kind of fluid, fresh water or drying air respectively drain water or cooling air.

A tank water valve 40 is arranged between the buffer tank 21 and the sump 3. A condensed water valve 41 is positioned in the condensed water duct 34, between the second duct 19 and the drain water port 10. In particular, the condensed water duct 34 is monotonically decreasing in a vertical direction between the second duct 19 and the drain water port 10. Condensed water can thus be conveyed solely gravity-induced from the heat exchanger 17 to the drain water port 10.

The fluid management device 4 comprises a heat conductor 42, which connects the drying air duct with the buffer tank 21 for conducting heat between water stored in the buffer tank 21 and drying air conveyed through the drying air duct. The heat conductor 42 comprises a heat pipe 43, which is in thermally conducting connection with fins extending into the drying air duct and fins extending into the buffer tank 21.

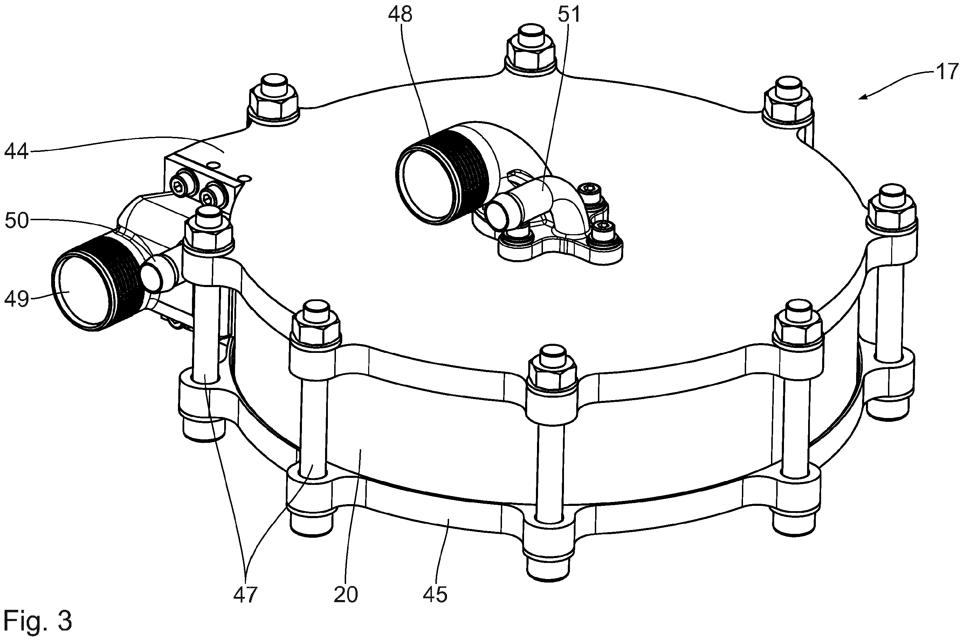

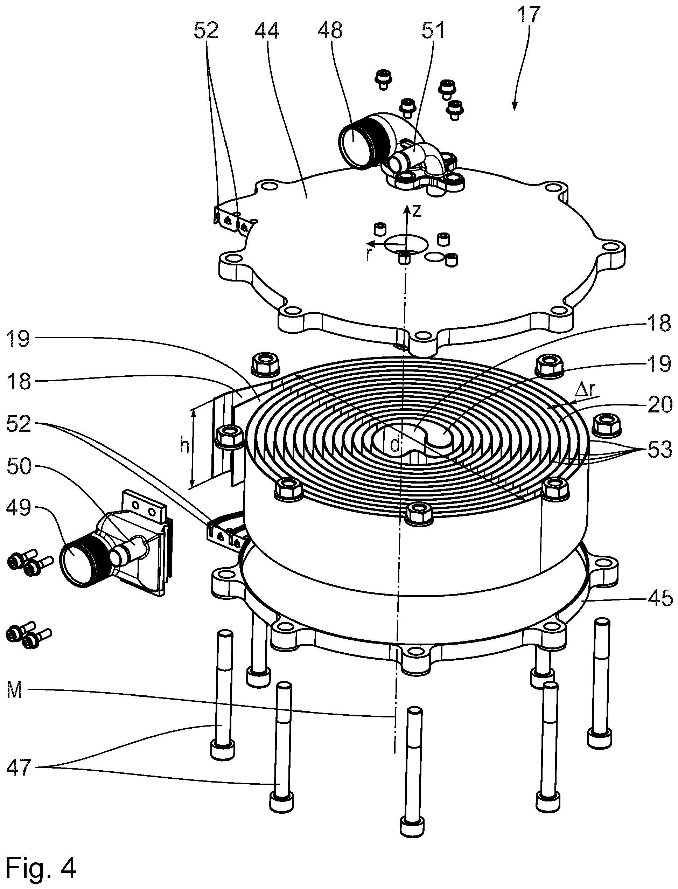

The heat exchanger 17 is shown in fig. 3 in more detail. The heat exchanger 17 comprises an upper cover 44 and a lower cover 45, which includes a spiral-shaped partition wall 20. The upper cover 44 is fastened to the lower cover 45 by means of screwed joints 47. A first duct inlet 48 of the heat exchanger 17 is connected to the first duct 18, arranged at the upper cover 44 and configured as screw connection. The first duct outlet 49 of the heat exchanger 17 is connected to the first duct 18, arranged between the upper cover 45 and the lower cover 45, connected tangentially to the partition wall 20 and configured as a screw connection. The second duct inlet 50 is connected to the second duct 19, arranged between the upper cover 44 and the lower cover 45, directed tangentially with respect to the partition wall 20 and configured as plug connection. A second duct outlet 51 is connected to the second duct 19, arranged at the upper cover 44 and configured as plug connection. The heat exchanger 17 is shown in more detail in fig. 4. The first duct inlet 48 and the second duct outlet 51 respectively the first duct outlet 49 and the second duct inlet 50 are integrally formed as a single piece. The partition wall 20 is arranged in grooves 52. The grooves 52 provide for a fluid tight connection between the upper cover 44 and the lower cover 45 with the partition wall 20 as well as for an accurate spacing of adjacent windings 53 of the partition wall 20 in the radial direction r. A distance Δr of adjacent windings 53 of the partition wall 20 in the radial direction r is preferably 5 mm.

The dishwasher 1 comprises a control device 54, which is in signal connection with the water pumps 15, 39, the air blowers 16, 24, the tank heating unit 22, the sump heating unit 23, the air heating unit 25 and the multiple valves 35, 35', 36, 36', 37, 37', 38, 38', 40, 41. The control device 54 is configured to provide these components with electric energy and to control them.

The functionality of the dishwasher 1, in particular the fluid management device 4 and the heat exchanger 17, is as follows:
In an initial state, the control device 54 is deactivated and all valves 35, 35', 36, 36', 37, 37', 38, 38', 40, 41 are closed. By means of a not depicted user interface, a user selects a washing program and starts the washing session. The control device 54 is activated and starts the first washing phase.

In the first washing phase, the control device 54 provides a signal for opening the fresh water valves 35, 35' and the tank water valve 40. The sump 3 is filled with fresh water. When the sump 3 is filled the fresh water valves 35, 35' and the tank water valve 40 are closed.

The control device 54 provides a signal for activing the sump heating unit 23 to heat the fresh water within the sump 3. Due to a further signal of the control device 54, the first water pump 15 is activated. The fresh water or washing water is pumped to the spraying arms 7, dispensed over the dishes 6 and collected back in the sump 3 for recirculating it through the water duct 32.

For replacing the drain water, the first water pump 15 is deactivated, the second water pump 39 is activated and the drain water valves 37, 37' are opened. The first washing phase is finished. The drain water is conveyed by the second water pump 39 from the sump 3 to the drain water port 10 through the heat exchanger 17, in particular through the first duct 18. Simultaneously, the fresh water valves 35, 35' are opened and fresh water is conducted through the second duct 19 of the heat exchanger 17 into the buffer tank 21. Thermal energy is transferred from the drain water to the fresh water by means of the heat exchanger 17. The heated fresh water is stored in the buffer tank 21 until the sump 3 is completely evacuated. The buffer tank 21 comprises a not depicted heat isolation for avoiding loss of thermal energy during storage of the heated fresh water. The control device 54 controls the flow of fresh water and drain water by means of the fresh water valves 35, 35' and the drain water valves 37, 37', such that the volume of water in the buffer tank 21 corresponds to the volume of drain water, which is released from the sump 3.

The fresh water valves 35, 35' and the drain water valves 37, 37' are closed and the second water pump 39 is deactivated. In order to increase the temperature of the fresh water stored in the buffer tank 21, the tank heating unit 22 is activated. After a target temperature is reached, the tank heating unit 22 is deactivated and the tank water valve 40 is opened. The heated fresh water is conducted into the sump 3 through the water duct 29'. The tank water valve 40 is closed. The next washing phase is initiated by the control device 54 and the fresh water respectively the washing water is circulated through the water duct 32 and dispensed over the dishes 6, as described above. Several further washing phases are processed.

After cleaning of the dishes 6 is finished, the first water pump 15 is deactivated. The drain water is conveyed through the drain water port 10, while fresh water is conducted into the buffer tank 21 as described above. Within the heat exchanger 17 thermal energy is transferred from the drain water to the fresh water. Afterwards, all valves 35, 35' 36, 36', 37, 37' 38, 38', 40, 41 are closed.

A drying process for drying the wetted dishes 6 is initiated. Therefore, the drying air valves 36, 36' are opened by means of a signal from the control device 54. The control device 54 also provides a signal for activating the air heating unit 25. By means of the second air blower 24 moist air is separated from the tub 2 over the drying air inlet 28 through the second duct 19, the second air blower 24 and the air heating unit 25 back into the tub 2 via the drying air nozzles 27. Simultaneously, the first air blower 16 is activated and the cooling air valves 38, 38' are opened by means of a signal from the control device 54 such that cooling air is conveyed from the air inlet 12 through the first duct 18 of the heat exchanger 17 to the air outlet 13. Within the heat exchanger 17 thermal energy is transferred from the drying air to the cooling air. Within the heat exchanger 17 the temperature of the drying air is reduced such that the dew point of the moist air is passed. Moisture is thereby separated from the drying air and collected within the condensed water duct 34.

After the temperature of the drying air is reduced and moisture is separated from the drying air within a heat exchanger 17, the drying air is conveyed through the heat conductor 42. The heat conductor 42 conducts thermal energy from the heated fresh water within the buffer tank 21, in particular over the heat pipe 43, into the air duct 33, in particular to heat conducting fins, which increase the surface that is flowed around by the drying air. Thermal energy is thus transferred from the heated fresh water over the heat pipe 43 and the fins to the drying air. Within the air heating unit 25, the temperature of the drying air is increased. The dehumidified, heated drying air is blown through the drying air nozzles 27 in the direction of the dishes 26 which are thereby dried effectively.

After the drying process is finished, the air blowers 16, 24 and the air heating unit 25 are deactivated. The drying air valves 36, 36' are closed. By means of a signal from the control device 54, the condensed water valve 41 is opened. The condensed water, which was separated from the drying air is conducted gravity-induced to the drain water port 10.

The washing cycle is completed and the control device 54 is deactivated. The heated fresh water is stored within the heat-insulated buffer tank 21 until the next washing session is initiated.

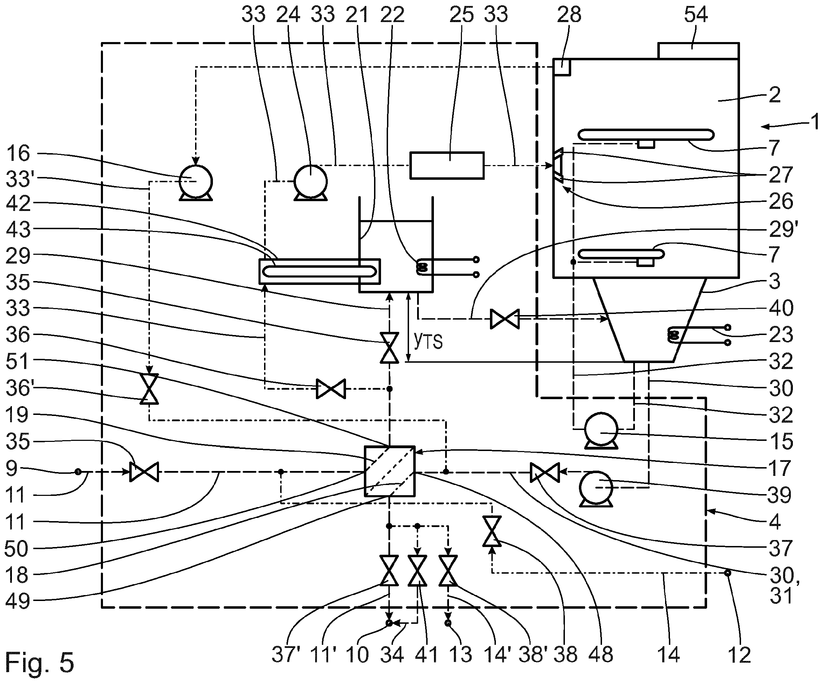

The dishwasher 1 according to the second embodiment is shown in fig 5. The dishwasher 1 according to the second embodiment has an open drying circuit respectively an open drying air duct. The drying air duct extends from the air inlet 12 via the air duct 14, the air valve 38, the second duct 19 of the heat exchanger 17, the drying air valve 36, the heat conductor 42, the second air blower 24 and the air heating unit 25 to the drying air outlet 26. A moist air duct extends from the air inlet 28 via the air duct 33', the first air blower 16, the air valve 36', the first duct 18 of the heat exchanger 17, the air valve 38' and the air duct 14' to the air outlet 13. By means of the first air blower 16 moist and hot air is separated from the tub 2 via the air inlet 28 and conducted through the first duct 18 to the air outlet 13. Simultaneously, fresh air is conveyed by means of the second air blower 24 from the air inlet 12 through the second duct 19 of the heat exchanger 17, and via the heat conductor 42, the air heating unit 25 and the drying air nozzles 27 into the tub 2. Within the heat exchanger 17 thermal energy is transferred from the moist and hot air to the fresh air. Within the heat exchanger 17 the temperature of the fresh air is increased such that it can be used to dry the dishes 6. The temperature of the moist air is decreased within the heat exchanger 17. Moisture is separated from the moist air and collected within the condensed water duct 34 and discharged by means of the condensed water valve 41 to the drain water port 10. The dishwasher 1 enables an effective and energy efficient drying process since the moisture content of the drying air is low.

The dishwasher 1 with the fluid management device 4, in particular the heat exchanger 17 provides for a highly energy efficient washing cycle. Electric energy for heating washing water, in particular fresh water, is not only drained through the drain water port 10 but recovered within the exchanger 17 for heating fresh water respectively drying air. Since the heat exchanger 17 is configured in the form of a spiral plate heat exchanger 17, which is in particular used in counterflow operation, thermal energy can be recovered from the drain water particularly effective. The spiral plate heat exchanger 17 can be configured very compact and nevertheless is insensitive to clogging. Due to using one single heat exchanger 17 for transferring thermal energy between drain water and fresh water, as well as between cooling air and drying air, the fluid management device 4 and thus the dishwasher 1 can be manufactured cost-effectively.

## Claims

1. A dishwasher, comprising a heat exchanger (17) for recovering thermal energy,
- wherein the heat exchanger (17) comprises at least a first fluid duct (18) and a second fluid duct (19) and said fluid ducts (18, 19) are shaped in a spiral manner,
- wherein the first fluid duct (18) and the second fluid duct (19) are separated from each other by means of at least one partition wall (20) such that thermal energy is transferred from a fluid within the first fluid duct (18) to a fluid within the adjacent second fluid duct (19) over the at least one partition wall (20),
**characterized in that**
the at least one partition wall (20) is shaped in a spiral manner.

2. A dishwasher according to claim 1 **characterized by** a drain water duct, which extends through the heat exchanger (17) for connecting a tub (2), in particular a sump (3), to a drain water port (10).

3. A dishwasher according to claim 1 or 2 **characterized by** a fresh water duct, which extends through the heat exchanger (17) for connecting a fresh water port (9) to a tub (2), in particular a sump (3).

4. A dishwasher according to claim 3 **characterized in that** the fresh water duct and the drain water duct extend through the heat exchanger (17) such that the heat exchanger (17) is used in counterflow operation.

5. A dishwasher according to claim 3 or 4, **characterized in that** an outermost fluid duct (18, 19) of the heat exchanger (17) in radial direction is part of the fresh water duct or drain water duct.

6. A dishwasher according to any of the preceding claims, **characterized in that** the fluid ducts (18, 19) have different cross sections or equal cross sections.

7. A dishwasher according to any of the preceding claims, **characterized in that** a diameter (d) of the at least one partition wall (20) of the heat exchanger (17) is greater than a height (h) of the at least one partition wall (20).

8. A dishwasher according to any of the preceding claims, **characterized by** a buffer tank (21) for storing water, which is in fluid conducting connection with a fresh water duct.

9. A dishwasher according to claim 8, **characterized in that** the buffer tank (21) is heat-insulated.

10. A dishwasher according to claim 8 or 9, **characterized by** a tank heating unit (22) for heating water within the buffer tank (21).

11. A dishwasher according to any of the preceding claims, **characterized by** a drying air duct which extends through the heat exchanger (17), in particular for conveying drying air through the tub (2).

12. Dishwasher according to claim 11, **characterized in that** the drying air duct being at least in sections identical with the fresh water duct and/or the drain water duct.

13. Dishwasher according to claim 11 or 12, **characterized by** a heat conductor (42), which connects the drying air duct (33) with the buffer tank (21) for conducting heat between water stored in the buffer tank (21) and the drying air.

14. A dishwasher according to any of the preceding claims, **characterized by** a condensed water duct (34) for connecting the heat exchanger (17) with a drain water port (10).

15. Method to operate a dishwasher (1) according to at least one of claims 1 to 14.

## Patentansprüche

1. Geschirrspülmaschine mit einem Wärmetauscher (17) zur Rückgewinnung von Wärmeenergie,
- wobei der Wärmetauscher (17) mindestens einen ersten Fluidkanal (18) und einen zweiten Fluidkanal (19) umfasst und die Fluidkanäle (18, 19) spiralförmig ausgebildet sind,
- wobei der erste Fluidkanal (18) und der zweite Fluidkanal (19) durch mindestens eine Trennwand (20) voneinander getrennt sind, so dass Wärmeenergie von einem Fluid innerhalb des ersten Fluidkanals (18) zu einem Fluid innerhalb des benachbarten zweiten Fluidkanals (19) über die mindestens eine Trennwand (20) übertragen wird,
**dadurch gekennzeichnet, dass**
die mindestens eine Trennwand (20) spiralförmig ausgebildet ist.

2. Geschirrspülmaschine nach Anspruch 1, **gekennzeichnet durch** eine Abwasserleitung, die sich durch den Wärmetauscher (17) hindurch erstreckt, um eine Wanne (2), insbesondere einen Pumpensumpf (3), mit einem Abwasseranschluss (10) zu verbinden.

3. Geschirrspülmaschine nach Anspruch 1 oder 2, **gekennzeichnet durch** eine Frischwasserleitung, die sich durch den Wärmetauscher (17) hindurch erstreckt, um einen Frischwasseranschluss (9) mit einer Wanne (2), insbesondere einem Pumpensumpf (3), zu verbinden.

4. Geschirrspülmaschine nach Anspruch 3, **dadurch gekennzeichnet, dass** die Frischwasserleitung und die Abwasserleitung durch den Wärmetauscher (17) verlaufen, so dass der Wärmetauscher (17) im Gegenstrombetrieb verwendet wird.

5. Geschirrspülmaschine nach Anspruch 3 oder 4, **dadurch gekennzeichnet, dass** ein in radialer Richtung äußerster Fluidkanal (18, 19) des Wärmetauschers (17) Teil der Frischwasser- oder Abwasserleitung ist.

6. Geschirrspülmaschine nach einem der vorhergehenden Ansprüche, **dadurch gekennzeichnet, dass** die Fluidkanäle (18, 19) unterschiedliche oder gleiche Querschnitte aufweisen.

7. Geschirrspülmaschine nach einem der vorhergehenden Ansprüche, **dadurch gekennzeichnet, dass** ein Durchmesser (d) der mindestens einen Trennwand (20) des Wärmetauschers (17) größer ist als eine Höhe (h) der mindestens einen Trennwand (20).

8. Geschirrspülmaschine nach einem der vorangehenden Ansprüche, **gekennzeichnet durch** einen Puffertank (21) zur Speicherung von Wasser, der in fluidleitender Verbindung mit einer Frischwasserleitung steht.

9. Geschirrspülmaschine nach Anspruch 8, **dadurch gekennzeichnet, dass** der Puffertank (21) wärmeisoliert ist.

10. Geschirrspülmaschine nach Anspruch 8 oder 9, **gekennzeichnet durch** eine Tankheizeinheit (22) zum Erwärmen von Wasser im Puffertank (21).

11. Geschirrspülmaschine nach einem der vorhergehenden Ansprüche, **gekennzeichnet durch** eine Trocknungsluftkanal, der sich durch den Wärmetauscher (17) erstreckt, insbesondere zur Förderung von Trocknungsluft durch die Wanne (2).

12. Geschirrspülmaschine nach Anspruch 11, **dadurch gekennzeichnet, dass** der Trocknungsluftkanal zumindest abschnittsweise identisch mit der Frischwasserleitung und/oder der Abwasserleitung ist.

13. Geschirrspülmaschine nach Anspruch 11 oder 12, **gekennzeichnet durch** einen Wärmeleiter (42), der den Trocknungsluftkanal (33) mit dem Puffertank (21) zur Wärmeleitung zwischen dem im Puffertank (21) gespeicherten Wasser und der Trocknungsluft verbindet.

14. Geschirrspülmaschine nach einem der vorhergehenden Ansprüche, **gekennzeichnet durch** eine Kondenswasserleitung (34) zur Verbindung des Wärmetauschers (17) mit einem Abwasseranschluss (10).

15. Verfahren zum Betreiben einer Geschirrspülmaschine (1) nach mindestens einem der Ansprüche 1 bis 14.

## Revendications

1. Lave-vaisselle comprenant un échangeur de chaleur (17) pour récupérer de l'énergie thermique,
- l'échangeur de chaleur (17) comprenant au moins un premier conduit de fluide (18) et un deuxième conduit de fluide (19) et lesdits conduits de fluide (18, 19) étant en forme de spirale,
- le premier conduit de fluide (18) et le deuxième conduit de fluide (19) étant séparés l'un de l'autre au moyen d'au moins une paroi de séparation (20), de sorte que l'énergie thermique est transférée d'un fluide à l'intérieur du premier conduit de fluide (18) à un fluide à l'intérieur du deuxième conduit de fluide (19) adjacent par l'intermédiaire d'au moins une paroi de séparation (20),
**caractérisé en ce que**
ladite au moins une paroi de séparation (20) est en forme de spirale.

2. Lave-vaisselle selon la revendication 1, **caractérisé par** un conduit d'eau de vidange qui s'étend à travers l'échangeur de chaleur (17) pour relier une cuve (2), en particulier un puisard (3), à un orifice d'eau de vidange (10).

3. Lave-vaisselle selon la revendication 1 ou 2, **caractérisé par** un conduit d'eau fraîche qui s'étend à travers l'échangeur de chaleur (17) pour relier un orifice d'eau fraîche (9) à une cuve (2), en particulier un puisard (3).

4. Lave-vaisselle selon la revendication 3, **caractérisé en ce que** le conduit d'eau fraîche et le conduit d'eau de vidange s'étendent à travers l'échangeur de chaleur (17) de telle sorte que l'échangeur de chaleur (17) est utilisé en fonctionnement à contre-courant.

5. Lave-vaisselle selon la revendication 3 ou 4, **caractérisé en ce qu'**un conduit de fluide ultime (18, 19) de l'échangeur de chaleur (17) dans la direction radiale fait partie du conduit d'eau fraîche ou du conduit d'eau de vidange.

6. Lave-vaisselle selon l'une quelconque des revendications précédentes, **caractérisé en ce que** les conduits de fluide (18, 19) ont des sections transversales différentes ou égales.

7. Lave-vaisselle selon l'une quelconque des revendications précédentes, **caractérisé en ce qu'**un diamètre (d) de ladite au moins une paroi de séparation (20) de l'échangeur de chaleur (17) est supérieur à une hauteur (h) de ladite au moins une paroi de séparation (20).

8. Lave-vaisselle selon l'une quelconque des revendications précédentes, **caractérisé par** un réservoir tampon (21) pour le stockage de l'eau, qui est en liaison fluidique avec un conduit d'eau fraîche.

9. Lave-vaisselle selon la revendication 8, **caractérisé en ce que** le réservoir tampon (21) est isolé thermiquement.

10. Lave-vaisselle selon la revendication 8 ou 9, **caractérisé par** une unité de chauffage du réservoir (22) pour chauffer de l'eau dans le réservoir tampon (21).

11. Lave-vaisselle selon l'une quelconque des revendications précédentes, **caractérisé par** un conduit d'air de séchage qui s'étend à travers l'échangeur de chaleur (17), en particulier pour acheminer de l'air de séchage à travers la cuve (2).

12. Lave-vaisselle selon la revendication 11, **caractérisé en ce que** le conduit d'air de séchage est au moins en partie identique au conduit d'eau fraîche et/ou au conduit d'eau de vidange.

13. Lave-vaisselle selon la revendication 11 ou 12, **caractérisé par** un conducteur de chaleur (42) qui relie le conduit d'air de séchage (33) au réservoir tampon (21) pour conduire de la chaleur entre l'eau stockée dans le réservoir tampon (21) et l'air de séchage.

14. Lave-vaisselle selon l'une quelconque des revendications précédentes, **caractérisé par** un conduit d'eau condensée (34) reliant l'échangeur de chaleur (17) à un orifice d'eau de vidange (10).

15. Procédé de fonctionnement d'un lave-vaisselle (1) selon au moins l'une quelconque des revendications 1 à 14.
